(19) Europäisches Patentamt
European Patent Office
Office européen des brevets

(11) **EP 3 205 699 A1**

(12) **DEMANDE DE BREVET EUROPEEN**

(43) Date de publication:
16.08.2017 Bulletin 2017/33

(51) Int Cl.:
*C09K 5/04* *(2006.01)*  *B60H 1/00* *(2006.01)*

(21) Numéro de dépôt: **17162639.3**

(22) Date de dépôt: **28.10.2009**

(84) Etats contractants désignés:
**AT BE BG CH CY CZ DE DK EE ES FI GB GR HR HU IE IS IT LI LT LU LV MC MK MT NL NO PL PT RO SE SI SK SM TR**

(30) Priorité: **03.11.2008 FR 0857454**

(62) Numéro(s) de document de la (des) demande(s) initiale(s) en application de l'article 76 CBE:
**09760545.5 / 2 342 302**

(71) Demandeur: **Arkema France**
**92700 Colombes (FR)**

(72) Inventeur: **RACHED, Wissam**
**69630 CHAPONOST (FR)**

(74) Mandataire: **Chahine, Audrey Claire**
**Arkema France**
**420, rue d'Estienne d'Orves**
**92705 Colombes Cedex (FR)**

Remarques:
Cette demande a été déposée le 23-03-2017 comme demande divisionnaire de la demande mentionnée sous le code INID 62.

(54) **PROCEDE DE CHAUFFAGE ET/OU CLIMATISATION D'UN VEHICULE**

(57) La présente invention concerne un procédé de chauffage et/ou climatisation d'un habitacle de véhicule automobile à l'aide d'une boucle frigorifique réversible dans laquelle circule un fluide frigorigène comprenant le 2,3,3,3-tetrafluoropropène. Ce procédé convient tout particulièrement lorsque la température extérieure est inférieure à -15° C. Il convient également aux véhicules automobiles hybrides qui sont conçus pour fonctionner en alternance sur moteur thermique et moteur électrique.

EP 3 205 699 A1

**Description**

La présente invention concerne un procédé de chauffage et/ou de climatisation d'un habitacle de véhicule automobile.

Dans les véhicules automobiles, le moteur thermique comporte un circuit de circulation d'un fluide caloporteur qui est utilisé pour le refroidissement du moteur et également pour le chauffage de l'habitacle. A cet effet, le circuit comprend notamment une pompe et un aérotherme dans lequel circule un flux d'air qui récupère la chaleur emmagasinée par le fluide caloporteur afin de chauffer l'habitacle.

Par ailleurs, un système de climatisation destiné à refroidir l'habitacle d'un véhicule automobile comprend un évaporateur, un compresseur, un condenseur, un détendeur et un fluide susceptible de changer d'états (liquide/gaz) communément désigné fluide frigorigène. Le compresseur, directement entraîné par le moteur du véhicule à l'aide d'une courroie et d'une poulie, comprime le fluide frigorigène, le refoulant sous haute pression et à haute température vers le condenseur. Le condenseur, grâce à une ventilation forcée, provoque la condensation du gaz qui arrive à l'état gazeux à haute pression et haute température. Le condenseur liquéfie le gaz grâce à l'abaissement de température de l'air qui le traverse. L'évaporateur, est un échangeur thermique qui prélève des calories à l'air qui sera soufflé dans l'habitacle. Le détendeur permet de réguler le débit d'entrée du gaz dans la boucle via une modification de section de passage dépendant de la température et de la pression au niveau de l'évaporateur. Ainsi, l'air chaud venant de l'extérieur se refroidit en traversant l'évaporateur.

Le fluide frigorigène largement utilisé dans la climatisation automobile est le 1,1,1,2 -tetrafluoroéthane (HFC-134a).

Le document WO 2008/107623 décrit un système de gestion d'énergie d'un vehicule automobile comprenant une boucle frigorifique réversible avec circulation d'un fluide frigorigène, des moyens d'inversion du cycle de fonctionnement de la boucle frigorifique mobiles entre une position en mode frigorifique et une position en mode pompe à chaleur, au moins une première source apte à récupérer l'énergie du fluide frigorigène, et au moins une seconde source apte à évaporer le fluide frigorigène suite à la détente dudit fluide de l'état liquide à l'état diphasique, les moyens d'inversion étant aptes à permettre un écoulement du fluide frigorigène de la première source de récupération en direction d'au moins une source d'évaporation, lorsqu'ils sont dans une position identique à celle correspondant au mode pompe à chaleur.

Toutefois, avec le HFC-134a comme fluide frigorigène dans le système tel que décrit le document WO 2008/107623, lorsque la température extérieure est autour de -15°C, une dépression commence à se former à l'évaporateur même avant que le compresseur ne soit lancé. Cette dépression qui conduit à une infiltration de l'air dans le système favorise les phénomènes de corrosion et la dégradation des composants tels que compresseur, échangeur et détendeur.

La présente invention a pour objectif d'empêcher l'air de pénétrer dans l'évaporateur de la boucle frigorifique au démarrage du compresseur et/ou d'améliorer le rendement de la boucle frigorifique.

La présente invention a donc pour objet un procédé de chauffage et/ou de climatisation d'un habitacle de véhicule automobile à l'aide d'une boucle frigorifique réversible, dans laquelle circule un fluide frigorigène, comprenant un premier échangeur de chaleur, un détendeur, un second échangeur de chaleur, un compresseur et des moyens d'inversion du sens de circulation du fluide frigorigène caractérisé en ce que le fluide frigorigène comprend le 2,3,3,3-tetrafluoropropène.

Les moyens d'inversion du sens de la circulation du fluide frigorigène dans la boucle frigorifique de manière à inverser le cycle de fonctionnement de celle-ci peuvent être constitués par une vanne à quatre voies.

Outre le 2,3,3,3-tetrafluoropropène, le fluide frigorigène peut comprendre des hydrofluorocarbures saturés ou insaturés.

Comme hydrofluorocarbures saturés, on peut citer notamment le difluorométhane, le difluoroéthane, le tetrafluoroéthane et le pentafluoroéthane.

Comme hydrofluorocarbures insaturés, on peut citer notamment le 1,3,3,3-tetrafluoropropène, les trifluoropropènes tel que le 3,3,3-trifluoropropène, et les monochlorotrifluoropropènes tel que le 1-chloro,3,3,3-trifluoropropène et le 2-chloro,3,3,3-trifluoropropène.

Les compositions suivantes peuvent convenir comme fluide frigorigène dans le procédé selon la présente invention :

- 80 à 98 % en poids de 2,3,3,3-tetrafluoropropène et 2 à 20 % en poids de difluorométhane,
- 40 à 95 % en poids de 2,3,3,3-tetrafluoropropène et 5 à 60 % en poids de 1,1,1,2 -tetrafluoroéthane,
- 90 à 98 % en poids de 2,3,3,3-tetrafluoropropène et 2 à 10 % en poids de difluoroéthane,
- 90 à 98% en poids de 2,3,3,3-tetrafluoropropène et 2 à 10 % en poids de pentafluoroéthane.

Les compositions suivantes conviennent tout particulièrement comme fluide frigorigène :

- 90 à 98 % en poids de 2,3,3,3-tetrafluoropropène et 2 à 10 % en poids de difluorométhane,
- 90 à 95 % en poids de 2,3,3,3-tetrafluoropropène et 5 à 10 % en poids de 1,1,1,2 -tetrafluoroéthane,
- 95 à 98 % en poids de 2,3,3,3-tetrafluoropropène et 2 à 5 % en poids de difluoroéthane,
- 95 à 98 % en poids de 2,3,3,3-tetrafluoropropène et 2 à 5 % en poids de pentafluoroéthane.

Une composition contenant essentiellement du 2,3,3,3-tetrafluoropropène est particulièrement préférée.

Le fluide frigorigène peut aussi comprendre des stabilisants du 2,3,3,3-tetrafluoropropène. A titre d'exemples de stabilisant, on peut citer notamment le nitromethane, l'acide ascorbique, l'acide terephtalique, les azoles tels que le tolutriazole ou le benzotriazole, les composés phénoliques tels que le tocopherol, l'hydroquinone, le t-butyl hydroquinone, le 2,6-di-ter-butyl-4-methylphenol, les epoxydes (alkyl éventuellement fluoré ou perfluoré ou alkenyl ou aromatique) tels que les n-butyl glycidyl ether, hexanediol diglycidyl ether, allyl glycidyl ether, butylphenylglycidyl ether, les phosphites, les phosphates, les phosphonates, les thiols et lactones.

Suivant le mode de fonctionnement de la boucle, frigorifique ou pompe à chaleur, le premier échangeur de chaleur peut jouer le rôle d'évaporateur ou de récupérateur d'énergie. Il en est de même pour le second échangeur de chaleur. En mode frigorifique, le second échangeur permet le refroidissement du flux d'air destiné à être pulsé à l'intérieur de l'habitacle du véhicule automobile. En mode pompe à chaleur, le second échangeur permet de réchauffer le flux d'air destiné à l'habitacle du véhicule automobile.

Le premier et second échangeurs de chaleur sont du type air / fluide frigorigène.

Dans le procédé selon la présente invention la boucle frigorifique peut être couplée thermiquement, à travers les échangeurs de chaleur, avec le circuit de refroidissement du moteur. Ainsi, la boucle peut comprendre au moins un échangeur de chaleur traversé à la fois par le fluide frigorigène et par un fluide caloporteur, notamment l'air ou l'eau du circuit de refroidissement du moteur thermique.

Selon une variante du procédé, le premier échangeur de chaleur est traversé à la fois par le fluide frigorigène et par des gaz d'échappement issus du moteur thermique du véhicule automobile ; ces derniers peuvent communiquer thermiquement avec un circuit de fluide caloporteur.

La boucle frigorifique dans le procédé, selon la présente invention, peut comprendre en dérivation au moins un échangeur de chaleur communiquant thermiquement avec un flux d'air, destiné à être admis à l'intérieur du moteur thermique du véhicule automobile, ou avec des gaz d'échappement issus du moteur thermique automobile.

Le procédé selon la présente invention convient tout particulièrement lorsque la température extérieure est inférieure à -15°C, de préférence inférieure à -20°C.

Le procédé selon la présente invention convient également aux vehicules automobiles hybrides qui sont conçus pour fonctionner en alternance sur moteur thermique et moteur électrique. Il permet de gérer au mieux les apports en énergie selon les conditions climatiques (chaud ou froid) tant pour l'habitacle que pour la batterie et notamment d'apporter du chaud ou du froid à la batterie à travers un circuit de fluide caloporteur.

La boucle frigorifique réversible, dans laquelle circule le fluide frigorigène comprenant du 2,3,3,3-tetrafluoropropène, installée dans des véhicules automobiles convient particulièrement pour la récupération d'énergie du moteur thermique et/ou de la batterie électrique utile pour le chauffage de l'habitacle et le moteur thermique pendant une phase de démarrage à froid. Cette boucle frigorifique réversible, lorsqu'elle comprend une pompe, peut fonctionner en mode Rankine (c'est-à-dire le compresseur fonctionne comme une turbine) pour valoriser l'énergie thermique produite par le moteur thermique et véhiculée ensuite par le fluide frigorigène, après transfert thermique.

L'invention a également pour objet un dispositif comprenant la boucle frigorifique tel que décrit précédemment.

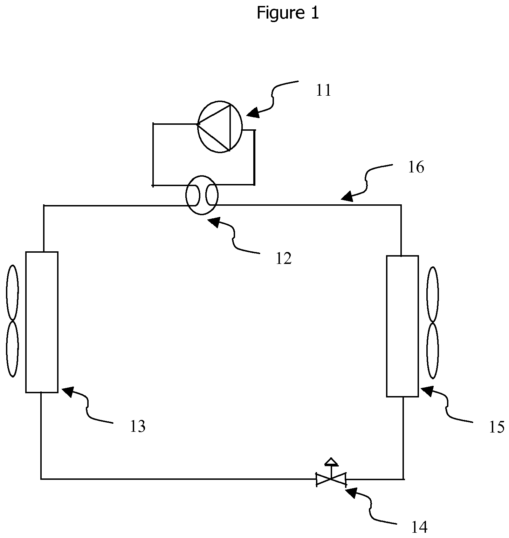

Selon un premier mode de réalisation de l'invention, représenté schématiquement par la Figure 1, la boucle frigorifique (16) comprend un premier échangeur de chaleur (13), un détendeur (14), un second échangeur de chaleur (15), un compresseur (11) et une vanne à quatre voies (12). Le premier et second échangeurs de chaleur sont du type air/ fluide frigorigène. Le premier échangeur de chaleur (13) est traversé par le fluide frigorigène de la boucle (16) et par le flux d'air amené par un ventilateur. Une partie ou la totalité de ce même flux d'air, traverse aussi un échangeur de chaleur du circuit de refroidissement du moteur (non représenté sur la figure). De la même manière, le second échangeur (15) est traversé par un flux d'air amené par un ventilateur. Une partie ou la totalité de ce flux d'air traverse aussi un autre échangeur de chaleur du circuit de refroidissement du moteur (non représenté sur la figure). Le sens de circulation de l'air est fonction du mode de fonctionnement de la boucle (16) et des besoins du moteur thermique. Ainsi, quand le moteur thermique est en régime stationnaire et la boucle (16) en mode pompe à chaleur, l'air peut être chauffé par l'échangeur du circuit de refroidissement du moteur thermique puis, soufflé sur l'échangeur (13) pour accélérer l'évaporation du fluide de la boucle (16) et donc améliorer les performances de cette boucle.

Les échangeurs du circuit de refroidissement peuvent être activés à l'aide des vannes suivant les besoins du moteur thermique (chauffage de l'air entrant dans le moteur ou valorisation d'énergie produite par ce moteur).

En mode frigorifique, le fluide frigorigène mis en mouvement par le compresseur (11) traverse, via la vanne (12), l'échangeur (13) jouant le rôle de condenseur (c'est-à-dire dégage des calories vers l'extérieur), ensuite le détendeur (14), puis l'échangeur (15) jouant le rôle d'évaporateur permettant ainsi le refroidissement du flux d'air destiné à être pulsé à l'intérieur de l'habitacle du véhicule automobile.

En mode pompe à chaleur, le sens d'écoulement du fluide frigorigène est inversé par l'intermédiaire de la vanne (12). L'échangeur de chaleur (15) joue le rôle de condenseur tandis que l'échangeur (13) joue le rôle d'évaporateur. L'échangeur de chaleur (15) permet alors de réchauffer le flux d'air destiné à l'habitacle du véhicule automobile.

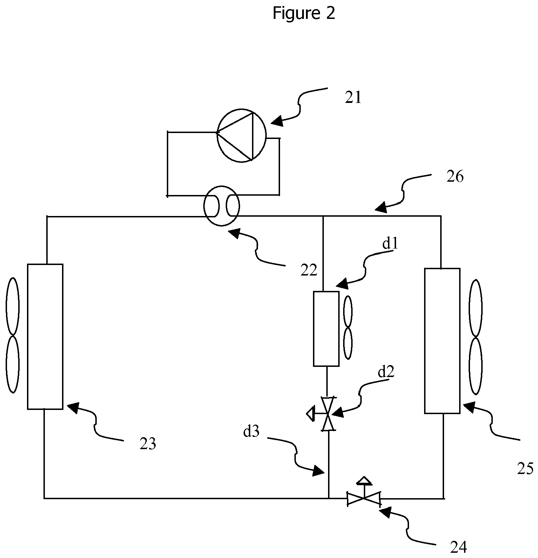

Selon un deuxième mode de réalisation de l'invention, représenté schématiquement par la Figure 2, la boucle frigorifique (26) comprend un premier échangeur de chaleur (23), un détendeur (24), un second échangeur de chaleur (25), un compresseur (21), une vanne à quatre voies (22) et une branche de dérivation (d3) montée d'une part à la sortie de l'échangeur (23), et d'autre part à la sortie de l'échangeur (25), en considérant la circulation du fluide en mode frigorifique. Cette branche comprend un échangeur de chaleur (d1) traversé par un flux d'air ou un flux de gaz d'échappement destiné à être admis à l'intérieur du moteur thermique et un détendeur (d2). Le premier et second échangeurs (23 et 25) de chaleur sont du type air/ fluide frigorigène. Le premier échangeur de chaleur (23) est traversé par le fluide frigorigène de la boucle (26) et par le flux d'air amené par un ventilateur. Une partie ou la totalité de ce même flux d'air, traverse aussi un échangeur de chaleur du circuit de refroidissement du moteur (non représenté sur la figure). De la même manière, le second échangeur (25) est traversé par un flux d'air amené par un ventilateur. Une partie ou la totalité de ce flux d'air traverse aussi un autre échangeur de chaleur du circuit de refroidissement du moteur (non représenté sur la figure). Le sens de circulation de l'air est fonction du mode de fonctionnement de la boucle (26) et des besoins du moteur thermique. A titre d'exemple, quand le moteur thermique est en régime stationnaire et la boucle (26) en mode pompe à chaleur, l'air peut être chauffé par l'échangeur du circuit de refroidissement du moteur thermique puis, soufflé sur l'échangeur (23) pour accélérer l'évaporation du fluide de la boucle (26) et améliorer les performances de cette boucle.

Les échangeurs du circuit de refroidissement peuvent être activés à l'aide des vannes suivant les besoins du moteur thermique (chauffage de l'air entrant dans le moteur ou valorisation d'énergie produite par ce moteur).

L'échangeur de chaleur (d1) peut aussi être activé suivant les besoins énergétiques que ce soit en mode frigorifique ou en mode pompe à chaleur. Des vannes d'arrêt peuvent être installées sur la branche (d3) pour activer ou désactiver cette branche.

L'échangeur (d1) est traversé par un flux d'air amené par un ventilateur. Ce même flux d'air peut traverser un autre échangeur de chaleur du circuit de refroidissement du moteur et aussi d'autres échangeurs placés sur le circuit des gaz d'échappement, sur l'arrivée d'air au moteur ou sur la batterie dans les voitures hybrides.

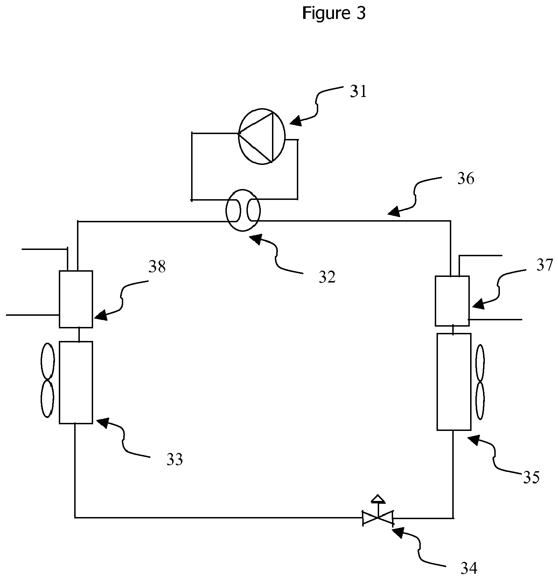

Selon un troisième mode de réalisation de l'invention, représenté schématiquement par la Figure 3, la boucle frigorifique (36) comprend un premier échangeur de chaleur (33), un détendeur (34), un second échangeur de chaleur (35), un compresseur (31) et une vanne à quatre voies (32). Le premier et second échangeurs (33 et 35) de chaleur sont du type air/ fluide frigorigène. Le fonctionnement des échangeurs (33 et 35) est identique au premier mode de réalisation présenté à la Figure 1. Deux échangeurs fluide/liquide (38 et 37) sont installés à la fois sur le circuit de la boucle frigorifique (36) et sur le circuit de refroidissement du moteur thermique ou sur un circuit secondaire d'eau glycolée. L'installation des échangeurs fluide/liquide sans passer par un fluide intermédiaire gazeux (air) contribue à l'amélioration des échanges thermiques par rapport aux échangeurs air / fluide.

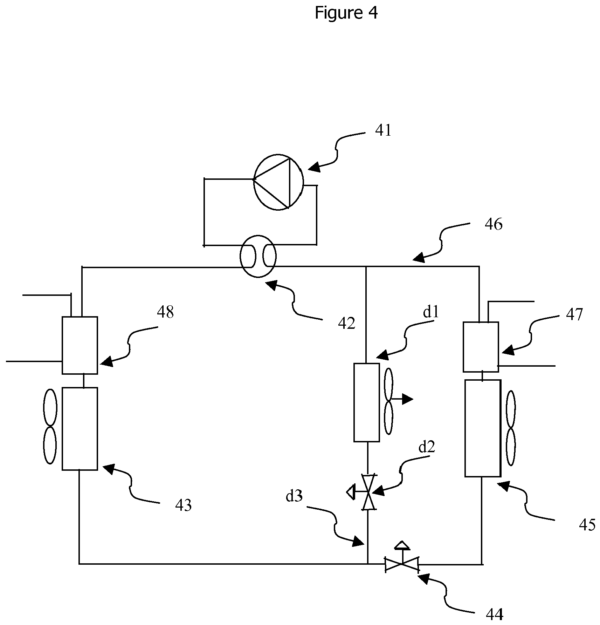

Selon un quatrième mode de réalisation de l'invention, représenté schématiquement par la Figure 4, la boucle frigorifique (46) comprend une première série échangeur de chaleur (43 et 48), un détendeur (44), une seconde série échangeur de chaleur (45 et 47), un compresseur (41) et une vanne à quatre voies (42). Une branche de dérivation (d1) montée d'une part à la sortie de l'échangeur (43), et d'autre part à la sortie de l'échangeur (47), en considérant la circulation du fluide en mode frigorifique. Cette branche comprend un échangeur de chaleur (d1) traversé par un flux d'air ou un flux de gaz d'échappement destiné à être admis à l'intérieur du moteur thermique et un détendeur (d2). Le fonctionnement de cette branche est identique au second mode de réalisation présenté à la Figure 2.

Les échangeurs (43 et 45) de chaleur sont du type air/ fluide frigorigène et les échangeurs (48 et 47) sont du type liquide/fluide frigorigène. Le fonctionnement de ces échangeurs est identique au troisième mode de réalisation présenté à la Figure 3.

PARTIE EXPERIMENTALE

Des simulations des performances du fluide frigorigène dans les conditions de fonctionnement de pompe à chaleur dans les véhicules et en fixant la température au condenseur à 30°C sont données ci-dessous.

Température de condensation : +30°C (T cond)
Température entrée compresseur : +5°C (Te comp)
Evap P : est la pression à l'évaporateur
Cond P : est la pression au condenseur
T sortie comp: est la température à la sortie compresseur
Taux : le taux de compression est le rapport de la haute pression sur la basse pression.
COP : coefficient de performance et est défini, lorsqu'il s'agit d'une pompe à chaleur comme étant la puissance chaude utile fournie par le système sur la puissance apportée ou consommée par le système.

CAP : capacité volumétrique, c'est la capacité calorifique par unité de volume (kJ/m$^3$) % CAP ou COP c'est le rapport de la valeur du CAP ou COP du 2,3,3,3-tetrafluoropropène (HFO-1234yf) par rapport à ceux du HFC-134a.

Rendement isentropique du compresseur : c'est le rapport entre l'énergie réelle transmise au fluide et l'énergie isentropique.

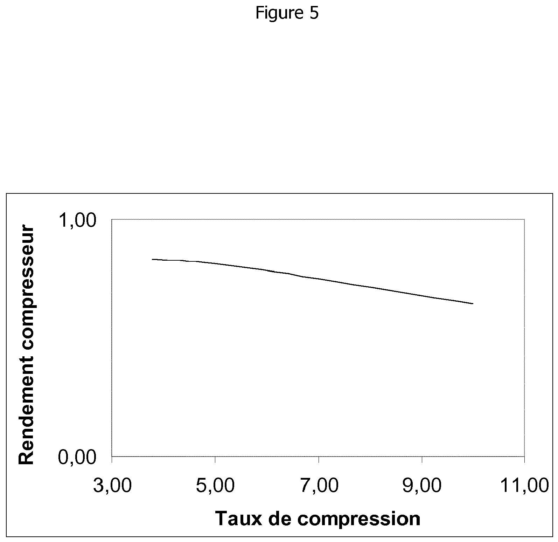

Le rendement isentropique du compresseur est exprimé en fonction du taux de compression. (Figure 5)

$$\eta = a + b\,\tau + c \cdot \tau^2 + d \cdot \tau^3 + e \cdot \tau^4$$

η: *rendementisentropique*
τ: *taux de compression*
*a, b, c et e : constantes*

Les valeurs des constantes a, b, c, d et e sont déterminées suivant une courbe typique de rendement. D'après le "Handbook of air conditioning and refrigeration, Shan k. Wang"

Pour le HFC-134a, le COP et la pression à l'évaporateur diminuent avec la température d'évaporation.

| | Tempévap (°C) | evap P (kpa) | cond P (kPa) | Taux (p/p) | T sortie comp | CAP (KJ/m3) | Rend isentrop | COPc |
|---|---|---|---|---|---|---|---|---|
| HFC-134a | -35,00 | 66,70 | 768,33 | 11,52 | 82,61 | 679,70 | 0,62 | 2,32 |
| | -30,00 | 84,92 | 768,33 | 9,05 | 75,31 | 841,71 | 0,68 | 2,82 |
| | -25,00 | 106,89 | 768,33 | 7,19 | 68,35 | 1032,37 | 0,75 | 3,39 |
| | -20,00 | 133,14 | 768,33 | 5,77 | 61,72 | 1255,21 | 0,79 | 4,01 |

Pour le HFO-1234yf dans les mêmes conditions on trouve :

| | Temp évap (°C) | evap P (kpa) | cond P (kPa) | Taux (p/p) | T sortie comp | CAP (KJ/m3) | Rend isentrop | COPc | %cap | %COP |
|---|---|---|---|---|---|---|---|---|---|---|
| HFO-1234yf | -35,00 | 77,05 | 772,09 | 10,02 | 70,15 | 707,00 | 0,66 | 2,43 | 104 | 104 |
| | -30,00 | 97,01 | 772,09 | 7,96 | 64,10 | 865,60 | 0,72 | 2,91 | 103 | 103 |
| | -25,00 | 120,73 | 772,09 | 6,40 | 58,36 | 1049,51 | 0,77 | 3,45 | 102 | 102 |
| | -20,00 | 148,64 | 772,09 | 5,19 | 52,88 | 1261,40 | 0,81 | 4,01 | 100 | 100 |

Le HFO-1234yf montre une pression à l'évaporateur supérieure à la pression du HFC-134a ce qui aide à limiter l'infiltration d'air à l'intérieur du système quand ce système fonctionne à très basse température.

Pour un même compresseur, à très basse température, le HFO-1234yf est plus performant que le HFC-134a. En mode chauffage et quand la température de condensation est de 30°C, le HFO-1234yf montre un meilleur rendement au compresseur, un meilleur COP et une meilleure capacité.

Mode de réalisation 1 : Procédé de chauffage et/ou de climatisation d'un habitacle de véhicule automobile à l'aide d'une boucle frigorifique réversible, dans laquelle circule un fluide frigorigène, comprenant un premier échangeur de chaleur, un détendeur, un second échangeur de chaleur, un compresseur et des moyens d'inversion du sens de circulation du fluide frigorigène caractérisé en ce que le fluide frigorigène comprend le 2,3,3,3-tetrafluoropropène.

Mode de réalisation 2: Procédé selon le mode de réalisation 1, caractérisé en ce que le fluide frigorigène peut comprendre des hydrofluorocarbures saturés et insaturés.

Mode de réalisation 3: Procédé selon le mode de réalisation 1 ou 2, caractérisé en ce que le premier et second échangeurs sont du type air / fluide frigorigène.

Mode de réalisation 4: Procédé selon l'un quelconque des modes de réalisation 1 à 3, caractérisé en ce que la boucle frigorifique est couplée thermiquement avec le circuit de refroidissement du moteur thermique.

Mode de réalisation 5: Procédé selon l'un quelconque des modes de réalisation 1 à 4, caractérisé en ce que le premier échangeur de chaleur est traversé à la fois par le fluide frigorigène et par des gaz d'échappement issus du moteur thermique du véhicule automobile.

Mode de réalisation 6: Procédé selon l'un quelconque des modes de réalisation 1 à 5, caractérisé en ce que la boucle peut comprendre en dérivation au moins un échangeur de chaleur communiquant thermiquement avec un flux d'air, destiné à être admis à l'intérieur du moteur thermique du véhicule automobile, ou avec des gaz d'échappement issus du moteur thermique automobile.

Mode de réalisation 7 : Procédé selon l'un quelconque de modes de réalisation 1 à 6, caractérisé en ce que la boucle frigorifique est installée dans les véhicules pour la récupération d'énergie du moteur thermique et/ou de la batterie électrique.

Mode de réalisation 8: Dispositif comprenant la boucle frigorifique réversible selon l'un quelconque des modes de réalisation 1 à 7.

**Revendications**

1. Procédé de chauffage et/ou de climatisation d'un habitacle de véhicule automobile à l'aide d'une boucle frigorifique réversible, dans laquelle circule un fluide frigorigène, comprenant un premier échangeur de chaleur, un détendeur, un second échangeur de chaleur, un compresseur et des moyens d'inversion du sens de circulation du fluide frigorigène **caractérisé en ce que** le fluide frigorigène comprend le 2,3,3,3-tetrafluoropropène, la température extérieure étant inférieure à -15°C, de préférence inférieure à -20°C.

2. Procédé selon la revendication 1 **caractérisé en ce que** le fluide frigorigène peut comprendre des hydrofluorocarbures saturés et insaturés.

3. Procédé selon la revendication 1 ou 2 **caractérisé en ce que** le premier et second échangeurs sont du type air / fluide frigorigène.

4. Procédé selon l'une quelconque des revendications 1 à 3 **caractérisé en ce que** la boucle frigorifique est couplée thermiquement avec le circuit de refroidissement du moteur thermique.

5. Procédé selon l'une quelconque des revendications 1 à 4 **caractérisé en ce que** le premier échangeur de chaleur est traversé à la fois par le fluide frigorigène et par des gaz d'échappement issus du moteur thermique du véhicule automobile.

6. Procédé selon l'une quelconque des revendications 1 à 5 **caractérisé en ce que** la boucle peut comprendre en dérivation au moins un échangeur de chaleur communiquant thermiquement avec un flux d'air, destiné à être admis à l'intérieur du moteur thermique du véhicule automobile, ou avec des gaz d'échappement issus du moteur thermique automobile.

7. Procédé selon l'une quelconque des revendications 1 à 6 **caractérisé en ce que** la boucle frigorifique est installée dans les véhicules pour la récupération d'énergie du moteur thermique et/ou de la batterie électrique.

**8.** Dispositif comprenant la boucle frigorifique réversible selon l'une quelconque des revendications précédentes.

Figure 1

Figure 2

Figure 3

Figure 4

Figure 5

Europäisches
Patentamt

European
Patent Office

Office européen
des brevets

# RAPPORT DE RECHERCHE EUROPEENNE

Numéro de la demande

EP 17 16 2639

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A,D | WO 2008/107623 A (RENAULT SA [FR]; OLIVIER GERARD [FR]) 12 septembre 2008 (2008-09-12) * le document en entier * ----- | 1-8 | INV. C09K5/04 B60H1/00 |
| A | FR 2 905 633 A (VALEO SYSTEMES THERMIQUES [FR]) 14 mars 2008 (2008-03-14) * page 1, ligne 13 - page 2, ligne 2 * * revendications; figures * ----- | 1-8 | |
| A | WO 2007/002625 A (HONEYWELL INT INC [US]; SINGH RAJIV R [US]; PHAM HANG T [US]; WILSON D) 4 janvier 2007 (2007-01-04) * page 19, lignes 3-10 * * page 47, lignes 2-14 * ----- | 1-8 | |
| A | WO 2008/027555 A (DU PONT [US]; MINOR BARBARA HAVILAND [US]; BIVENS DONALD BERNARD [US];) 6 mars 2008 (2008-03-06) * page 1, ligne 23 - page 2, ligne 3 * * revendications 1,11 * ----- | 1-8 | DOMAINES TECHNIQUES RECHERCHES (IPC) |
| A | US 2008/011110 A1 (COSTONIS JOEL F [US]) 17 janvier 2008 (2008-01-17) * alinéas [0041], [0042] * ----- | 1-8 | C09K B60H |

Le présent rapport a été établi pour toutes les revendications

| Lieu de la recherche | Date d'achèvement de la recherche | Examinateur |
|---|---|---|
| La Haye | 6 juillet 2017 | Puetz, Christine |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.......................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 17 16 2639

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

06-07-2017

| Document brevet cité au rapport de recherche | | Date de publication | Membre(s) de la famille de brevet(s) | Date de publication |
|---|---|---|---|---|
| WO 2008107623 | A | 12-09-2008 | ----------------------------------------- | |
| FR 2905633 | A | 14-03-2008 | AUCUN | |
| | | | ----------------------------------------- | |
| WO 2007002625 | A | 04-01-2007 | ----------------------------------------- | |
| WO 2008027555 | A | 06-03-2008 | ----------------------------------------- | |
| US 2008011110 | A1 | 17-01-2008 | AUCUN | |
| | | | ----------------------------------------- | |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• WO 2008107623 A